# EUROPEAN PATENT APPLICATION

(11) **EP 1 256 527 A2**
(43) Date of publication of application: **13.11.2002**
(21) Application number: 02011590.3
(22) Date of filing: 07.11.1997
(51) Int. Cl.: B65D 88/12, B65D 90/00

(54) **Corner construction for a freight container**

(30) Priority: 07.11.1996 GB 9623227
(62) Divisional of application: 97912311.4
(71) Applicant: Geest Patent B.V., 2691 JD'S Gravenzande (NL)
(72) Inventor: Pronk, Wouter, 2406 KW Alphen aan den Rijn (NL); Harrison, William Michael, Monmouthshire NP6 4NH (GB)
(74) Representative: Bardo, Julian Eason

(57) **Abstract**

A freight container includes corner fittings at each of the corner extremities of the container. The corner fittings at one end of the container have exterior end faces (18T) arranged such that an outer region (19T) of each end face, which is spaced further from a longitudinal plane than an inner region (20T). As a result the overall length of the container measured at the lateral extremities of the container can be reduced.

## Description

This invention relates to freight containers and to corner fittings for such containers. Such containers are conventionally of generally cuboidal shape and have corner fittings by means of which they can both be engaged by container handling apparatus when being loaded onto or unloaded from a wheeled vehicle, for example a road trailer or a railway wagon, or ship and be held in position on such a vehicle or ship.

Commonly such containers are 20 feet (6058mm) or 40 feet (12192mm) in length but there are also containers that are 45 feet (13716mm) in length. Containers of length 45' are usually provided not only with corner fittings at each end of the container but also with corner fittings spaced 40' (12192mm) apart and disposed symmetrically about a central transverse plane of the container. The fittings that are 40' apart enable the container to be engaged by equipment designed to engage the corner fittings of a 40' container, even though the container has a total length of 45'.

The corner fittings conventionally provided at the corner of a container are themselves commonly of cuboidal shape. Three of the six faces of each corner fitting abut, over at least part of each face, parts of the rest of the container to which the corner fitting is typically secured by welding. The other three faces of the corner fitting are exposed and define the corner extremities of the container. In the case of a corner fitting at the top of a container the three exposed faces are a top face, a side face (that is a face parallel to the side of the container) and an end face (that is a face parallel to the end of the container). In the case of a corner fitting at the bottom of a container the three exposed faces are a bottom face, a side face and an end face.
The exposed faces of the corner fitting project outwardly at least as far as adjacent parts of the rest of the container and usually a little further. Each of the exposed faces of the corner fitting are provided with openings leading into a hollow interior of the fitting. The openings enable fastening devices to be fixed to the container for example for securing the container to a wheeled vehicle, a lashing device on a ship, or another container, or to enable the container to be engaged by load handling equipment.

The benefits of using such freight containers arise from the ease with which they can be secured to vehicles or ships and the ease with which they can be handled, resulting from the standardisation of the dimensions of the container and in particular the standardisation of the location of the corner fittings. Thus there is one standardised size of container in which the corner fittings are spaced with their laterally outer side faces 2438mm apart and their outer end faces 6058mm apart (for a 20 foot container), 12192mm apart (for a 40 foot container) and 13716mm apart (for a 45 foot container). As indicated above, in the case of the 45 foot container there are also fittings provided 40 feet apart and the fittings are located in the same positions as the corner fittings on a 40 foot container. Given such standardisation it is possible to provide simple securing arrangements on vehicles and ships for securing containers and also to provide load handling equipment which, without complicated adjustment, is able to move containers from one place to another; also containers can easily be stacked one on top of another with the bottom corner fittings of one container resting on the top corner fittings of a container below.

Typically, a container is secured to a wheeled vehicle by engaging fastening devices on the vehicle with bottom corner fittings on the container, the fasteners on the vehicle extending into the openings in the bottom faces of the corner fittings and/or the openings in the end faces of the corner fittings. On a ship, the container may be secured in cell guides, in which case the corner fittings are not required, or may be secured by lashings and/or by being fastened to a container or deck immediately below. Where lashings are used, one end of each lashing is typically secured to the deck of the ship and the other end of the lashing secured to the opening in the end face of one of the corner fittings. Each lashing may extend diagonally across the end of a container or of a stack of containers. A container may also be secured to a container below or a deck by twist locks each of which engages in the opening in the bottom face of a respective one of the four bottom corner fittings of a container and in a similar opening in the deck or in the top faces of the top corner fittings of a container immediately below. When a container is engaged by load handling equipment, the top corner fittings are used and the openings in the top faces and/or the end faces of the corner fittings are generally the ones by which the container is secured to the equipment.

In order that full advantage can be gained from the standardisation of the positioning of the corner fittings it is very important that the corner fittings are positioned precisely. That in turn prevents even a very small reduction in the spacing of the corner fittings, however desirable that might otherwise be. For example, if it is desired to reduce the length of a 20 foot, 40 foot or 45 foot container even by only a few mm, that would alter the spacing of the corner fittings to a non-standard spacing.

It is an object of the invention to provide a container in which certain external dimensions of the container are slightly reduced without the positions of the corner fittings being altered.

It is a further object of the invention to provide a corner fitting of special form to enable certain external dimensions of a container to be slightly reduced without the positions of the corner fittings being altered.

According to the invention there is provided a freight container of generally cuboidal shape including corner fittings at each of the corner extremities of the container, a central, vertical, longitudinal plane being defined along the length of the container with the corner fittings spaced by equal amounts on opposite sides of said longitudinal plane and a central, vertical, transverse plane being defined across the width of the container perpendicular to said longitudinal plane, with the corner fittings spaced by equal amounts on opposite sides of said transverse plane, wherein the corner fittings at one end of the container have exterior end faces arranged such that an outer region of each end face, which is spaced further from said longitudinal plane than an inner region, is spaced less far from said transverse plane than the inner region of the end face.

By arranging the end faces of the corner fittings in the manner just described, it is possible to reduce certain external dimensions of the container, without altering the position of the corner fittings. For example, an opening in the top face of a top corner fitting and an opening in the bottom face cf a bottom corner fitting may be provided in exactly the same positions as on a container having conventional corner fittings. The end faces of the corner fittings at said one end of the container are arranged such that at least part of the inner region of each end face is spaced further from said transverse plane than any part of an outer region of the end face.

The precise arrangement of each exterior end face may take various forms. Preferably, at least a portion of each exterior end face is an inclined face inclined at an acute angle to said transverse plane. Each exterior end face preferably comprises an inner portion parallel to said transverse plane and an outer portion inclined at an acute angle to the transverse plane. The acute angle is preferably in the range of 25° to 60° and in an example of the invention described below is about 35°.

The amount by which the outermost region of each exterior end face is spaced further from said transverse plane than the innermost region of the end face may be small, for example in the range of 20 to 150mm and more preferably in the range of 60 to 100mm. In an example of the invention described below the spacing is about 80mm. Even on a container over 10,000mm long that spacing may be very significant. In an example described below the overall length of the container is 13716mm.

Preferably, when viewed in plan, an arc of a circle, at said one end of the container, of radius 2040mm, whose centre lies on said longitudinal plane at a spacing of 5142mm from said transverse plane passes outside the corner fittings at said one end of the container. Such a container is readily carried on a road trailer without the corners of the container at the front of the trailer protruding so far as with conventional corner fittings and may therefore comply more readily with regulations.

The width of the container, measured between the exterior side faces of opposite corner fittings on either side of said longitudinal plane may be 2438mm, that being a standard separation of the corner fittings. The exterior side faces of the container immediately surrounding the corner fittings are customarily spaced apart by a slightly smaller distance which may be maintained throughout the length of the container or may increase along a middle portion of the container. When the width of the container, when so measured, is 2438mm, a conventional container of length 13716mm would have corner fittings intersected by the arc of a circle defined in the paragraph immediately above.

Whilst it is within the scope of the invention to provide corner fittings with inclined end faces at both ends of a container, there will often be advantage in providing such fittings only at one end, typically the end that becomes the front end when the container is secured in the normal way to a road trailer. Thus the corner fittings at said other end of the container preferably have exterior end faces parallel to said transverse plane. Doors, or other cargo access means, may be provided at said other end of the container.

An especially advantageous feature of the present invention is to provide that at least one, usually all, of the corner fittings at said one end includes an opening in an exterior top or bottom face, a first opening in the exterior end face of the fitting and a second opening in the exterior end face of the fitting. We have found that, by providing two openings in the end face of the fitting, it is simple to provide a fitting which, although it leads to a reduction in certain external dimensions of the container, is also able to be engaged by load handling equipment, on trailers or ships as effectively as a conventional fitting. One opening can be used for some securing functions for which it is suitable and the other opening can be used for other securing functions for which it is suitable.

The container may include further fittings partway along the length of the container. For example, in the case of a container of overall length 13716mm, fittings may be symmetrically located about said longitudinal and transverse planes at positions corresponding to those of a 40 foot (12192mm) container.

The feature of providing two openings on the end face of the container represents an advantageous arrangement of independent significance. Accordingly, according to another aspect of the invention, there is provided a freight container of generally cuboidal shape including corner fittings at each end of the corner extremities of the container, at least one of the corner fittings including an opening in an exterior top face of the fitting, a first opening in an exterior end face of the fitting and a second opening in the exterior end face of the fitting, the opening in the top face of the fitting and the first opening in the exterior end face of the fitting communicating with one another via the interior of the corner fitting and being suitable for receiving a hook of load handling equipment with the hook passing into the corner fitting through one of the openings and out of the corner fitting through the other opening, the second opening in the exterior end face of the fitting being suitable for receiving a fastener of a lashing device. The freight container may also include, so far as appropriate, any of the other features described.

It will be appreciated that the construction of the freight container of the invention arises from the special form of corner fitting employed. Each corner fitting will usually be formed separately as a casting and thereafter secured, for example by welding, to the container body but, if desired, other arrangements may be adopted, for example, each corner fitting may be formed as an integral part of the container. The corner fitting may be manufactured and sold separately and the invention further provides a corner fitting for a freight container, the fitting including top and bottom substantially parallel faces, an interior side face, an interior end face substantially perpendicular to the top and bottom faces and arranged such that an outer region of the exterior end face is spaced less far from the interior end face than an inner region of the exterior end face.

By way of example certain embodiments of the invention will now be described with reference to the accompanying drawings, of which:
- Fig. 1: is a perspective view of a freight container.
- Fig. 2A: is a plan view of a top corner fitting of the container shown in Fig. 1,
- Fig. 2B: is a side view of the top corner fitting shown in Fig. 2A,
- Fig. 2C: is an end view of the top corner fitting shown in Fig. 2A,
- Fig. 2D: is a sectional view along the lines D-D in Fig. 2A,
- Fig. 2E: is a sectional view along the lines E-E in Fig. 2B,
- Fig. 3A: is a bottom plan view of a bottom corner fitting of the container shown in Fig. 1,
- Fig. 3B: is a side view of the bottom corner fitting shown in Fig. 3A,
- Fig. 3C: is an end view of the bottom corner fitting shown in Fig. 3A,
- Fig. 3D: is a sectional view along the lines D-D in Fig. 3A,
- Fig. 3E: is a sectional view along the lines E-E in Fig. 3B,
- Fig. 4: is a schematic plan view of part of the container,
- Fig. 5A: is a plan view of a top corner fitting which is a modified version of the corner fitting of Figs. 2A to 2E,
- Fig. 5B: is a side view of the top corner fitting shown in Fig. 5A,
- Fig. 5C: is an end view of the top corner fitting shown in Fig. 5A,
- Fig. 5D: is a sectional view along the lines D-D in Fig. 5A, and
- Fig. 5E: is a sectional view along the lines E-E in Fig. 5B.

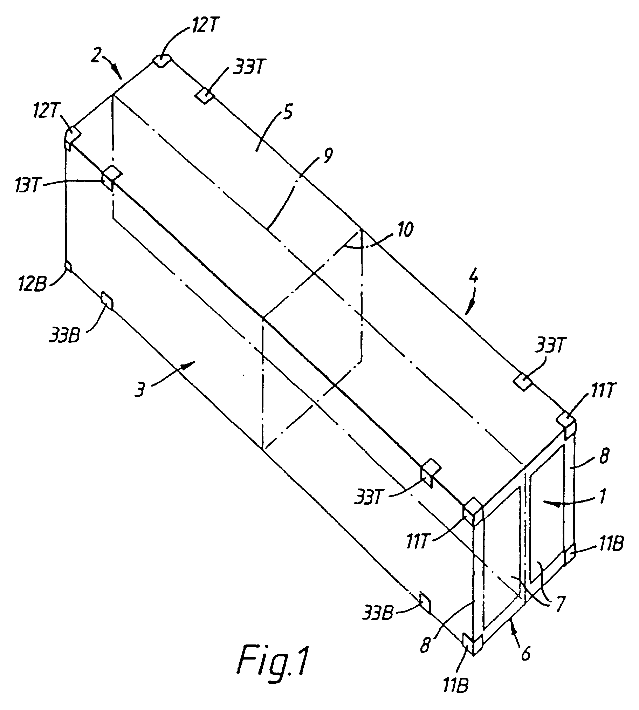

The freight container shown in Fig. 1 is of generally cuboidal shape having ends 1, 2, sides 3, 4, top 5 and a bottom 6. The end 1 of the container is provided with a pair of double doors 7 mounted on corner posts 8.

The container is substantially symmetrical about a central vertical longitudinal plane 9 marked in chain dotted outline in Fig. 1 and also about a central vertical transverse plane 10 marked in dotted outline in Fig. 1. The planes 9 and 10 are mutually perpendicular.

At each of the two top corners of the container at the end 1 a corner fitting 11T is provided and similarly at each of the two bottom corners of the container at the end 1 a corner fitting 11B is provided. At each of the two top corners of the container at the end 2 a corner fitting 12T is provided and similarly at each of the two bottom corners of the container at the end 2 a corner fitting 12B is provided. In the example illustrated in the drawings the container is a 45 foot (13716mm) container and there are eight further fittings 33T and 33B provided as two sets about 40 feet apart.
The fittings 11T, 11B, 12T, 12B, 33T and 33B are welded to load bearing parts of the container as with a conventional container and the remaining structure of the container is conventional and may be identical to that of known containers, except for some reshaping of the corner posts, if desired.

The corner fittings 11T and 11B, and the fittings 33T and 33B are of conventional design. For example the fittings 11T and 11B may be shaped and dimensioned as in the specification of British Standard 3951: Part 1: Section 1.2: 1985. The corner fittings 12T and 12B are, however, of a special design which will now be described.

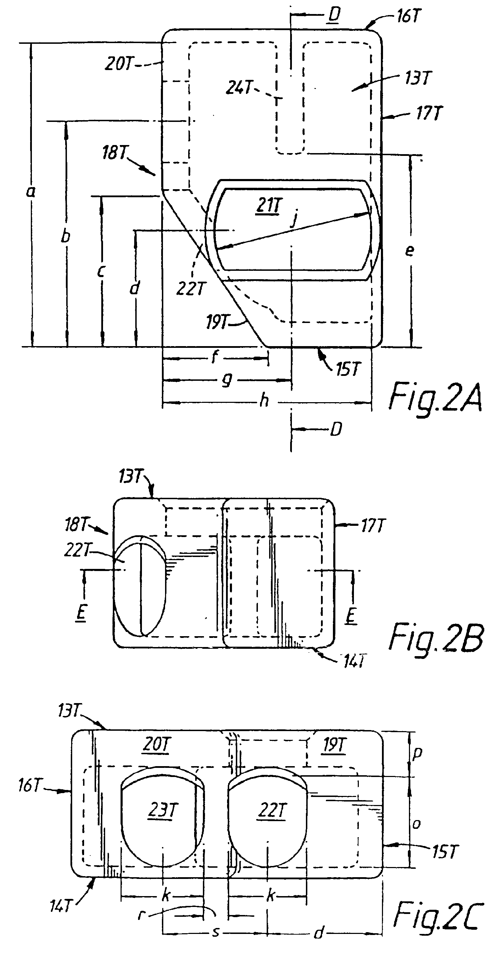

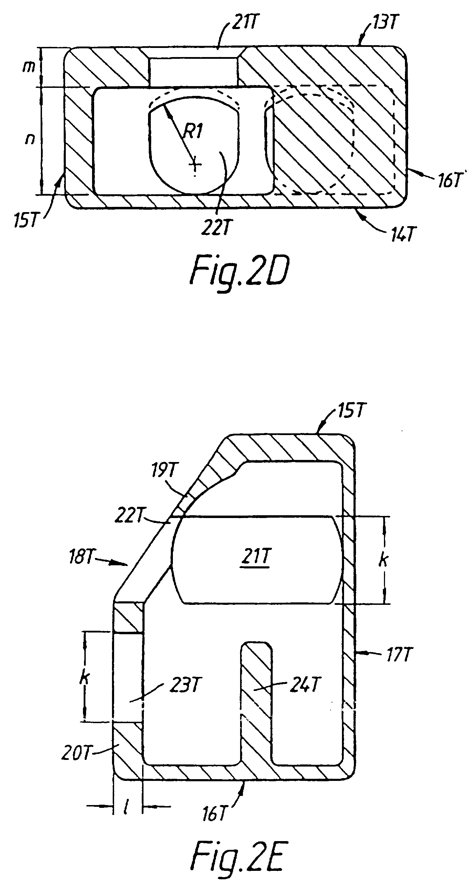

Figs. 2A to 2E show a corner fitting 12T. The fitting has a top face 13T, an interior bottom face 14T, an exterior side face 15T, an interior side face 16T, an interior end face 17T and an exterior end face 18T having two portions: an outer inclined portion 19T and an inner portion 20T parallel to the face 17T. The corner fitting is hollow and has three openings in its external walls: there is an opening 21T in the top face 13T, there is an opening 22T in the inclined portion 19T of the end face 18T and there is an opening 23T in the portion 20T of the end face 18T. The fitting has a strengthening wall 24T that extends outwardly from the interior side face 16T partway towards the exterior side face 15T and extends between the top and bottom walls of the fitting.

A conventional corner fitting has an opening in its exterior side face but it will be seen that the exterior side face 15T, which is shortened as a result of the inclination of the portion 19T of the end face 18T, is without any opening. That opening is not, however, generally required for securing or handling containers according to current methods.

The opening 21T in the top face 13T is positioned in the same place and is the same shape as a conventional fitting on a conventional container.

A conventional corner fitting has a flat exterior end face perpendicular to its side faces with a single opening centred on the same vertical longitudinal plane as the opening in the top face. That opening is used in conjunction with the opening in the top face to receive a hook of load handling equipment in a case where the hook is passed in through one opening and out through another; in the corner fitting of Figs. 2A to 2E, that function is fulfilled by the opening 22T in the inclined portion 19T acting in conjunction with the opening 21T in the top face. The opening in the end face of a conventional corner fitting is also used to receive a fastener of a lashing to secure the container on a ship; in that case an opening in an inclined face is not suitable, but the opening 23T in the portion 20T of the end face can be employed for the purpose; the opening 23T is in a different location from the single opening in the end face of a conventional corner fitting, but the precise location of the opening is not critical to the effective fastening of the lashing. Thus the two openings 22T and 23T are together able to fulfil the functions of the single opening provided in the end face of a conventional corner fitting.

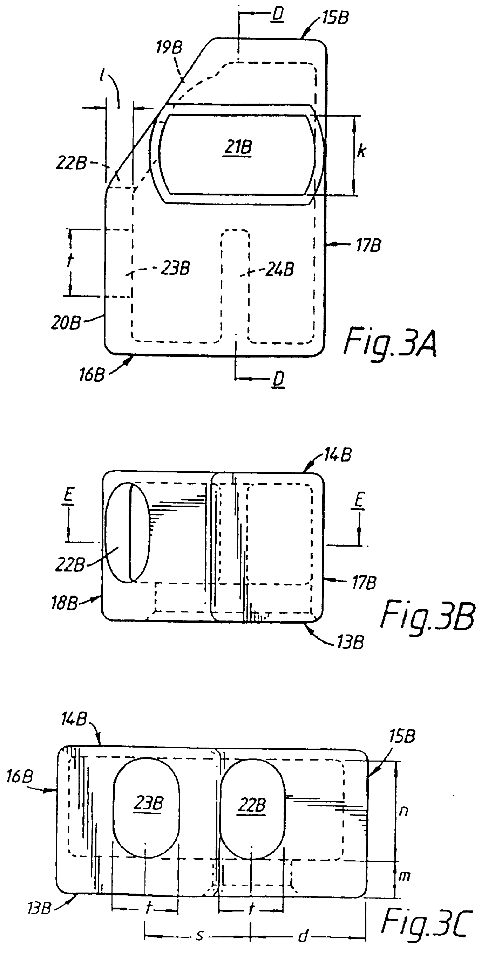

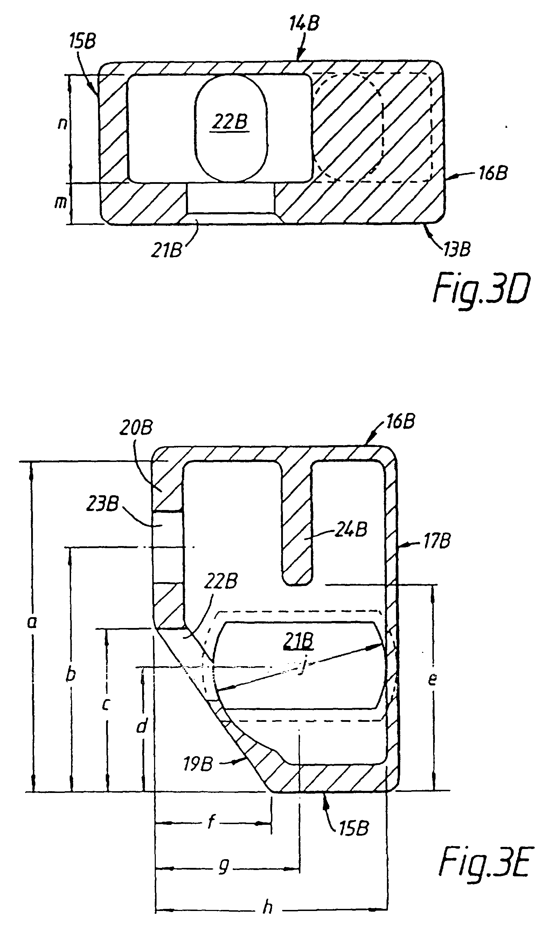

The corner fitting 12B shown in Figs. 3A to 3E is of similar construction to the fitting 12T and corresponding parts are referenced by the same reference numeral with the suffix B instead of T. In the fitting 12B the bottom face 13B corresponds to the top face 13T of the fitting 12T and the interior top face 14B corresponds to the interior bottom face 14T of the fitting 12T. The corner fitting 12B is provided with three openings 21B, 22B and 23B which correspond to the openings 21T, 22T and 23T. The opening 21B is identical to the opening 21T whilst the openings 22B and 23B are of a slightly different size and shape from the openings 22T and 23T, as shown in the drawings.

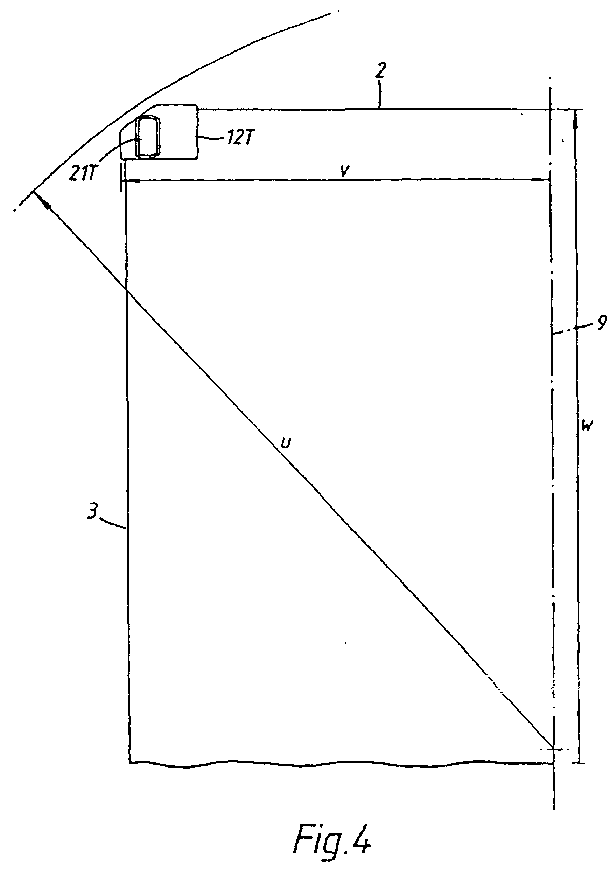

Fig. 4 shows schematically in plan view a portion of the end of the container opposite the end with the doors. It can be seen that as a result of the provision of the inclined portions 19T and 19B of the corner fittings 12T and 12B, the corner extremity of the container is curtailed; if necessary, the corner part of the container that extends vertically between the corner fittings 12T and 12B (this corner part usually being defined by what is known as a "corner post") is also reshaped so that no other part of the container projects beyond the corner fittings.

In the particular example of the invention described of a forty five foot container whose overall length is 13716mm, the size of the container is very close to various dimensional limits relevant to containers transported by road in Europe. More particularly, it is relevant to consider in Fig. 4, the position of an arc of a circle drawn with a radius of 2040mm and with its centre on the central longitudinal plane 9 at a distance of 1716mm from the end of the container (5142mm from the transverse plane 10). Such an arc is shown in Fig. 4 for the case where the exterior side faces 15T and 15B are 1219mm from the plane 9 (that being the case when the container has an overall width of 2438mm at its end). It will be seen that if a conventional corner fitting were used, such an arc would pass through the corner fitting but that, by using the special corner fittings described above, the arc passes outside the corner fittings even though the positions of the corner fittings as defined by the positions of the openings 21T and 21B is unaltered.

The curtailing of the corner extremity of the container can be especially advantageous when the container is being conveyed on a road trailer coupled via a kingpin to a lorry. Especially as a lorry turns a corner, it is the corner extremities of the container that project outwardly and are most likely to cause a hazard or contravene current regulations.

In Figs. 2A to 2E, 3A to 3E and Fig. 4 certain dimensions are indicated by letters. In a particular example of the invention those dimensions are as follows:
a: 234.25 minimum
b: 172.5
c: 116
d: 89
e: 149 minimum
f: 81
g: 101.5
h: 164.5 minimum
j: 124 diameter
k: 63.5
l: 20.5
m: 28.5
n: 79.5
o: 73 minimum
p: 33.5
r: 20
s: 83.5
t: 51
R1: 51
u: 2040
v: 1219
w: 1716

All the dimensions listed immediately above are in mm.

Whilst in the embodiment of the invention described above the container shown has sides and doors at one end, it should be understood that the invention can also be applied to other kinds of freight container, for example, a bulk container for carrying powders in which the doors might be replaced by a discharge flap, or to a tank container in which the sides, end, top and bottom of the container might be replaced by a framework carrying a cylindrical tank, with the corner fittings secured to that framework.

The container shown in the drawings has a constant external width throughout its length between the corner fittings. The container may alternatively be of the kind shown in EP 206,542, having a greater external width along a middle portion than along end portions.

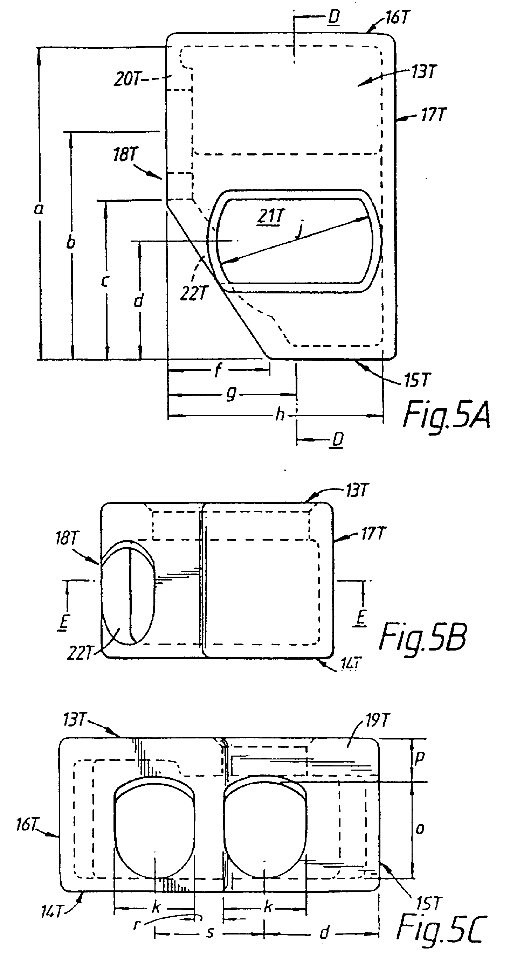

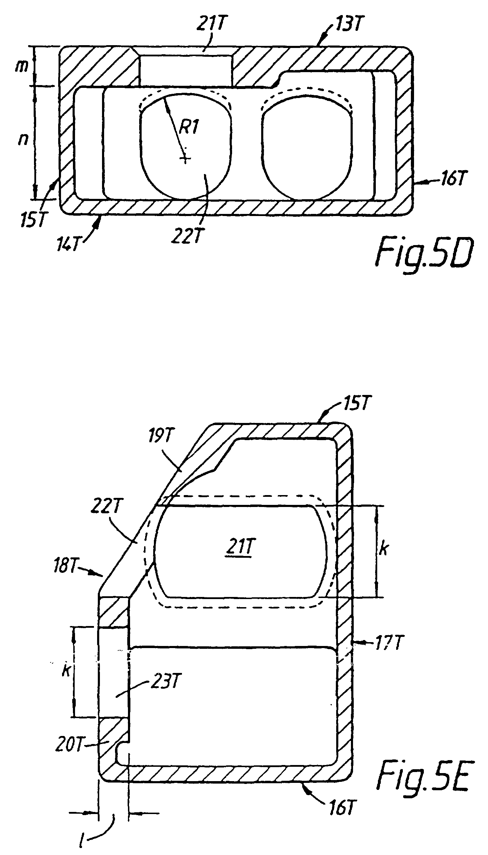

The top corner fitting shown in Figs. 5A to 5E is very similar to, but a more refined version of, the top corner fitting shown in Figs. 2A to 2E and the same reference numerals and dimension letters are used in Figs. 5A to 5E, as in Figs. 2A to 2E.

The top corner fitting of Figs. 5A to 5E has a reduced wall thickness in places compared to the top corner fitting of Figs. 2A to 2E and the strengthening wall 24T is omitted. Consequently the weight of the corner fitting is reduced. Also, as shown in the drawings certain internal corner regions of the corner fitting of Figs. 5A to 5E are smoothly curved to prevent unduly high stresses.

The dimensions, a to s and R1 of the corner fitting of Figs. 5A to 5E are the same as the corresponding dimensions of the corner fitting of Figs. 2A to 2E except for "a" which is 247 mm and "h" which is 170 mm. Dimensions "e" and "t" do not apply to the corner fittings of Figs. 5A to 5E.

It will be understood that similar modifications can be made, if desired, to the bottom corner fitting of Figs. 3A to 3E.

## Claims

1. A freight container of generally cuboidal shape including corner fittings at each end of the corner extremities of the container, at least one of the corner fittings including an opening in an exterior top face of the fitting, a first opening in an exterior end face of the fitting and a second opening in the exterior end face of the fitting, the opening in the top face of the fitting and the first opening in the exterior end face of the fitting communicating with one another via the interior of the corner fitting and being suitable for receiving a hook of load handling equipment with the hook passing into the corner fitting through one of the openings and out of the corner fitting through the other opening, the second opening in the exterior end face of the fitting being suitable for receiving a fastener of a lashing device.

2. A freight container of generally cuboidal shape including corner fittings at each of the corner extremities of the container, a central, vertical, longitudinal plane being defined along the length of the container with the corner fittings spaced by equal amounts on opposite sides of said longitudinal plane and a central, vertical, transverse plane being defined across the width of the container perpendicular to said longitudinal plane, with the corner fittings spaced by equal amounts on opposite sides of said transverse plane, wherein the corner fittings at one end of the container have exterior end faces arranged such that an outer region of each end face, which is spaced further from said longitudinal plane than an inner region, is spaced less far from said transverse plane than the inner region of the end face.

3. A freight container according to claim 2, in which at least a portion of each exterior end face is an inclined face inclined at an acute angle to said transverse plane.

4. A freight container according to claim 3, in which each exterior end face comprises an inner portion parallel to said transverse plane and an outer portion inclined at an acute angle to the transverse plane.

5. A freight container according to claim 4, in which the acute angle is in the range of 25° to 60°.

6. A freight container according to claim 5, in which the outermost region of the end face is spaced further from said transverse plane than the innermost region of the end face by an amount in the range of from 60 to 100mm.

7. A freight container according to any preceding claim, in which the overall length of the container is 13716mm.

8. A freight container according to claim 7, in which, when viewed in plan, an arc of a circle, at said one end of the container, of radius 2040mm, whose centre lies on said longitudinal plane at a spacing of 5142mm from said transverse plane, passes outside the corner fittings at said one end of the container.

9. A freight container according to claim 8, in which the width of the container measured between the exterior side faces of opposite corner fittings on either side of said longitudinal plane is 2438mm.

10. A freight container according to any preceding claim, in which the corner fittings at said other end of the container have exterior end faces parallel to said transverse plane.

11. A freight container according to any preceding claim, in which at least one of the corner fittings at said one end includes an opening in an exterior top or bottom face, a first opening in the exterior end face of the fitting and a second opening in the exterior end face of the fitting.

12. A freight container according to any preceding claim, including further fittings partway along the length of the container.

13. A corner fitting for a freight container, the fitting including an opening in an exterior top face of the fitting, a first opening in an exterior end face of the fitting and a second opening in the exterior end face of the fitting, the opening in the top face of the fitting and the first opening in the exterior end face of the fitting communicating with one another via the interior of the corner fitting and being suitable for receiving a hook of load handling equipment with the hook passing into the corner fitting through one of the openings and out of the corner fitting through the other opening, the second opening in the exterior end face of the fitting being suitable for receiving a fastener of a lashing device.

14. A corner fitting for a freight container, the fitting including top and bottom substantially parallel faces, an interior side face, an interior end face substantially perpendicular to the top and bottom faces and arranged such that an outer region of the exterior end face is spaced less far from the interior end face than an inner region of the exterior end face.
